Europäisches Patentamt

European Patent Office

Office européen des brevets

(19)

(11) **EP 1 398 717 A1**

(12) **EUROPEAN PATENT APPLICATION**

(43) Date of publication:
**17.03.2004 Bulletin 2004/12**

(51) Int Cl.⁷: **G06F 17/60**, G06F 17/30

(21) Application number: **02292221.5**

(22) Date of filing: **11.09.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **Atsmai Technology**
**75008 Paris (FR)**

(72) Inventors:
• **Jupin, Stéphane**
**75018 Paris (FR)**
• **Lamourelle, Olivier**
**75003 Paris (FR)**

(74) Representative: **Cabinet Hirsch**
**34, Rue de Bassano**
**75008 Paris (FR)**

(54) **Data refreshing process for a computer application**

(57)    A computer has an operating system with a dynamical data exchange server (4) managing dynamical data exchange channels to and from applications; the server receives a flow (8) of fresh data. For refreshing data in an application (2), a request DLL (26) indicates to the server (4) the nature of data requested by the application (2), without however requiring an answer from the server. A vocable system link process (32) creates or modifies dynamical data exchange channels (14) between the application (2) and the server (4) according to the nature of data indicated by the request DLL. Last, fresh data is pushed towards the application (2) on the dynamical data exchange channel (14) by an update process (34).

This makes it possible to refresh data, without generating instabilities due to pending requests to the dynamical data exchange server (4) that fail to be answered in real time.

FIG_2

## Description

The invention relates to the field of computers, and more specifically to data refreshing in applications running on a computer.

Operating systems for running applications on computers, like the one sold by Windows under the trademark Windows, provide a dynamical data exchange server. This dynamical data exchange server is used for dynamically exchanging data to and from the applications running under the operating system. The dynamical data exchange server allows applications to post dynamical data exchange requests and querry data while they are running. Such a server operates thanks to dynamical data exchange channels that may be created or modified according to the requests of applications. The server receives fresh data and provides this data to the applications in response to a dynamical data exchange request on a specific channel.

Applications which need to provide refresh functionality may use dynamical data exchange links for obtaining data to be refreshed from the server. This kind of refresh is however not carried out as a real time function; the time for serving a dynamical data exchange request for an application may vary over a range up to one second.

This may create a problem, especially if the refresh request is repeated and competes with other processes.

This problem is first exemplified in reference to the example of a (worksheet) in the spreadsheet sold by Microsoft under the trademark Excel. This spreadsheet is however only an example of an application using dynamical data exchange links for refreshing data. Specifically, the problem is exemplified in reference to a worksheet update, which is again only one possible example of a process using refreshed data in an application.

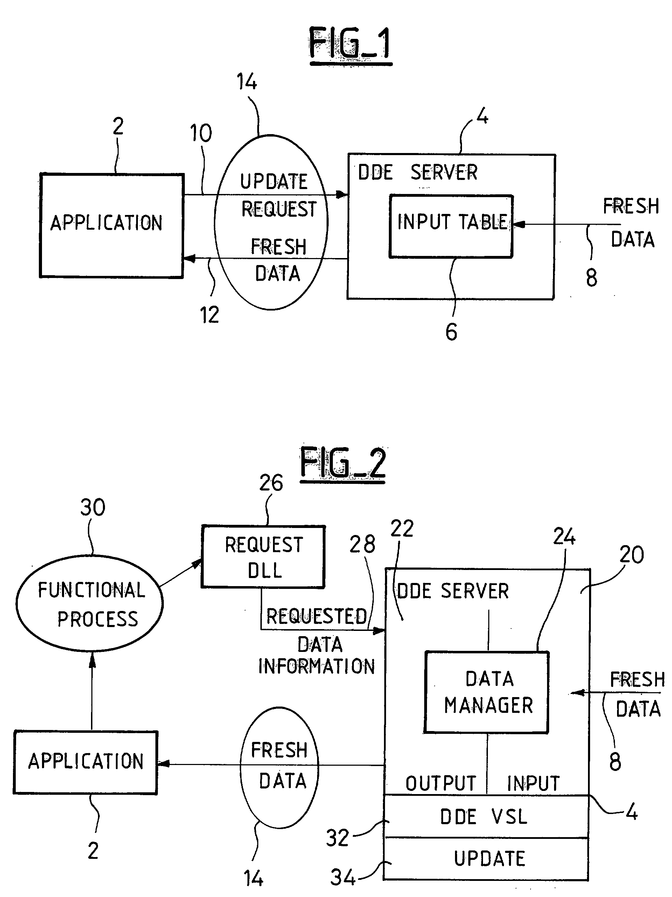

In Excel, the user is offered the ability to program a refresh rate for the information displayed in the various cells of a worksheet or used in the various cells; this makes it possible to refresh information for which a dynamical data exchange channel was programmed in a given cell. This is shown on figure 1, which is a schematic view of various software components used in this prior art refresh solution. Figure 1 shows the Excel application 2, as well as the dynamical data exchange server 4. Server 4 has an input table 6 and receives fresh data, as schematically represented by arrow 8. Application 2 issues update requests to server 4, as shown in figure 1 by arrow 10. In response to such requests, server 4 issues fresh data, as shown by arrow 12 in figure 1. The update request and the fresh data are exchanged through a dynamical data exchange channel created between the application and the dynamical data exchange server.

In the example of Excel, a dynamical data exchange channel is created for each piece of data that needs to be refreshed. Specifically, a dynamical data exchange is created for each given cell containing information to be refreshed.

In the automatic refresh mode, the information is refreshed with a period that may be set by the user : specifically, each time the period selected by the user has elapsed, the cells of the worksheet are scanned; for each cell having a dynamical data exchange channel, the corresponding request to the dynamical data exchange server is executed and updated information is obtained from the server. This amounts to scanning all dynamical data exchange channels in the worksheet. There is also provided a no-refresh mode, where the content of a cell is only refreshed upon manual request from the user; this is equivalent to inputting an infinite refresh period.

For instance, let C1 to C5 be five cells in a worksheet. A dynamical data exchange channel is defined for cells C1 to C3, so that the content of these cells is updated every time the worksheet is scanned in the automatic refresh mode. The content of cell C4 is defined as a function of cells C1 to C3, e.g. as a sum of the content of these cells, that is

$$C4 = C1 + C2 + C3$$

Under these assumptions, whenever the worksheet is refreshed, a dynamical data exchange request is issued for each one of cells C1 to C3, and the content of these cells is updated. When cell C4 is scanned, the sums of the refreshed values of cells C1 to C3 is computed. This provides a refreshed result for cell C4. The operation up to this stage is fully satisfactory.

Assume now that cell C5 contains a complex function, which involves a certain computing time. For instance, in the field of banking or engineering, the cells may invoke a dynamical link library (DLL) for computing a result. In the field of banking, the computing may involve pricing options using Monte-Carlo methods. In the field of engineering, the cells could represent the output of sensors; a function processing the output of these sensors would typically involve results of all cells for determining . whether a requested operation is obtained or not. One could also take the example of a function more elaborated than a simple sum of other cells. Such functions may takes several tens of seconds or some minutes to compute - that is a time one or two orders of magnitude higher than the refresh rate.

In the first instance of scanning the worksheet for refresh - e.g. shortly after the application is started - cells C1 to C4 are scanned, as discussed above; then, cell C5 is scanned and the corresponding DLL is invoked for computing the result. At the next refresh scan, when cell C5 is reached, it is possible that the DLL invoked in the first scan of cell C5 has not returned any result yet. This may happen inasmuch as the computing time is larger than the refresh rate; which is not a rare assumption. Under these circumstances, one of the following situations may occur :

- the operating system is blocked, which results in a crash of the computer and may in the best circumstances involve aborting the application;
- no value is ever displayed in cell C5, because the previously invoked DLL computation is aborted and a new DLL computation is started;
- a new computation is started in parallel to the previous one; this uses available resources and would shortly cause a crash due to lack of resources for satisfying repeated requests.

The same problem may occur in the example of a compiled application encapsulated in a Web page, with an automatic refresh of data. It is assumed that a Web page - a series of instructions to be executed in a browser such as the one sold by Microsoft under the trademark Internet Explorer - contains a compiled application, for displaying information to the user. The compiled application may be programmed for regular refresh of information. The Web server contains a dynamical data exchange server; the compiled application regularly issues dynamical data exchange requests to the dynamical data exchange server on a dynamical data exchange channel, over the http channel to the Web server. The dynamical data exchange server receives input data and serves requests for updated or refreshed data received from the compiled application over the http channel. In the user's computer, the dynamical data exchange request issued by the compiled application is handled as a process in the kernel. As such, it competes with other processes - be they internal or external to the application; as in the previous example, this repeated process may create a risk of instability in the computer, according to the nature and numbers of competing processes.

This problem was explained in the example of a worksheet in a spreadsheet, where the content of a cell is the result of a DLL with an execution time longer than the dynamical data exchange refresh rate. It was also exemplified in the case of a compiled application encapsulated in a Web page, which regularly issues requests for fresh data. More generally, the problem will exist in any circumstances where an application repeatedly requests fresh data from a dynamical data exchange server. These repeated requests may generate instability in the kernel, inasmuch as they are not served in real time.

The only solution to this problem that could currently be contemplated is to disable the automatic refresh - so as to avoid creating repeated dynamical data exchange requests and thus competing processes in the kernel of the operating system. However, this would prevents refreshed data from being displayed on a regular basis.

Thus, there is a need for a solution allowing data to be refreshed, notwithstanding the fact that the dynamical data exchange server of the operating system does not allow real time service of the requests.

The invention therefore provides, in one embodiment, a method for refreshing data in an application, comprising the steps of :

- providing a dynamical data exchange server;
- receiving fresh data in the server;
- indicating to the server the nature of data requested by the application;
- creating or modifying at least a dynamical data exchange channel between the server and the application according to the nature of data indicated;
- pushing fresh data towards the application on the dynamical data exchange channel.

The step of indicating may be carried out by a process invoked by the application. The step of creating or modifying is preferably carried out whenever nature of data is indicated to the server.

The method may further comprise the step of providing a second process, said second process being invoked for creating or modifying said at least one dynamical data exchange channel. In this case, the second process may process a vocable of the dynamical data exchange channel.

In another embodiment, the dynamical data exchange server comprises an input section for receiving fresh data, an output section from which data is pushed toward the application; the method further comprises the step of copying data from the input section to the output section. The step of indicating may then further comprises indicating a refresh status for the data requested by the application, and the step of copying may be carried out for the data requested by the application according to the refresh status.

A computer embodying the invention will now be described, by way of nonlimiting example, and in reference to the accompanying drawings, where :

- figure 1 is a schematic view of various software components used in a prior art refresh solution;
- figure 2 is a schematic view of various software components used in an embodiment of the invention;
- figure 3 is a more detailed view of the dynamical data exchange server of figure 2;
- figure 4 is a flowchart of a data request handing process according to one embodiment of the invention;
- figure 5 is a flowchart of a data receive process according to one embodiment of the invention;
- figure 6 is a flowchart of a data push process according to one embodiment of the invention.

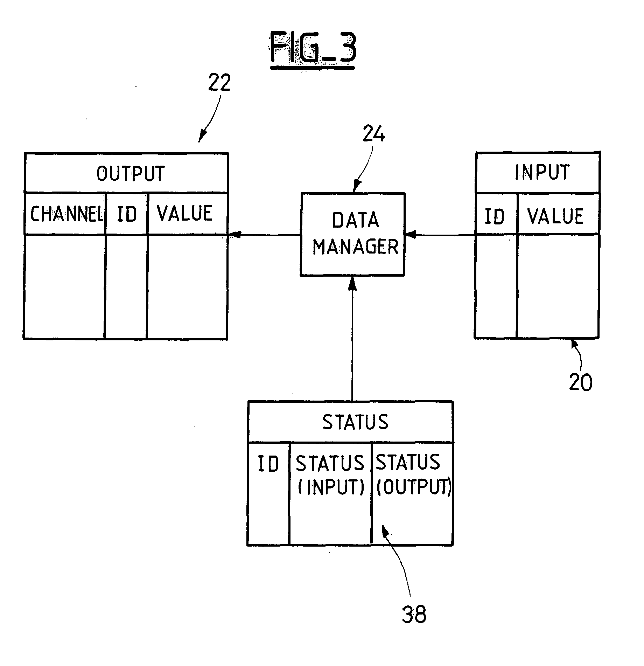

Figure 2 is a schematic view of the various software components running on the computer. The general operation of a computer system is here assumed to be known : reference may be made to the descriptions provided by microprocessors manufacturers such a Intel Corp. Briefly, the computer would comprise a central processing unit, such as a microprocessor, a mass memory for storing applications and data, a random access memory for storing applications currently executed on the central processing unit, as well as a bus of some kind for connecting the central processing unit to the various memories. The necessary I/O - keyboard, monitor and the like - are also connected to the bus. The code of the applications to be executed is loaded from the mass memory to the RAM, is copied from the RAM to the microprocessor and is executed in the microprocessor.

Figure 2 shows an application 2 and a dynamical data exchange server 4. As in figure 1, the server 4 receives fresh data, see reference 8. As discussed below in reference to figure 3, the server 4 may comprise an input section 20 and an output section 22; fresh data are received in the input section 20 and are copied to the output section 22 by a data manager 24; the data manager is a process, the operation of which is discussed below.

Contrary to the solution of the prior art discussed in reference to figure 1, requests for fresh data are not standard dynamical data exchange requests applied by application 2, to which an answer is expect. Thus, the application only addresses the server 4 for indicating the type of data to be refreshed, without expecting an immediate return of the data. In the embodiment of figure 2, this is carried out by a request DLL 26, which issues requested data information 28 to server 4. This DLL is. invoked by a functional process 30, according to the needs of the application. The functional request is not discussed at length here, and could simply be implemented in the application or separately from the application. Request DLL 26 issues requested data information 28 indicating the requested data as well as the application for which the requested data is intended to be used; the request DLL may also provide more information, e.g. a cell reference in an Excel worksheet, or the address of a memory to which the updated data should be provided. The request DLL may therefore control the data to be refreshed, e.g. for requesting new data, ceasing to refresh some data, or the like. Due to this control of the data to be refreshed, dynamical data exchange server 4 is aware of the data to be provided to the application.

In the example of the Excel spreadsheet given above, the functional process could be invoked any time a cell is modified. The functional process would then invoke the request DLL for indicating to the dynamical data exchange server that the newly-amended cell requires certain type of information.

In the example of the application encapsulated in a Web page, the functional process could be programmed in the application for invoking the request DLL, whenever there is a change in the nature of the information which needs to be refreshed. For instance, there may be provided a button - implemented in a Java (trademark) script - which causes the data to be refreshed or modified: Any time the user activates the button, the DLL request would be invoked.

Another example is a window displaying information such as time or date. Such a window is a process started at boot of the computer; at this time, the DLL request would be invoked, for indicating to the dynamical data exchange server the type of information requested, e.g. the current time and its format, as well as the memory location where this information should be written. The functional process would not be invoked any more, unless the corresponding window is closed and reopened.

Thanks to this control of the data, the dynamical data exchange server 4 is kept aware of the nature of the data requested by each application. It should already be noted that the application does not issue any dynamical data exchange request, contrary to the prior art solution depicted in figure 1.

Figure 2 further shows two other processes, which may be implemented in the dynamical data exchange server 4. The first process is a dynamical data exchange vocable link process 32 (hereafter dynamical data exchange VSL or VSL). VSL 32 may be implemented within the dynamical data exchange server 4. It is invoked whenever a requested data update is presented to server 4 by request DLL 26. According to the content of the requested data update, VSL 32 creates or amends a dynamical data exchange channel 14 between dynamical data exchange server 4 and the relevant application 2.

The function of the VSL 32 could be implemented by the function provided in Window for this effect ("create ???"). However, the fact that a separate process is used means that the process is invoked, so that additional processes may also be invoked at this time, if necessary. For instance, assume there is a need for computing, on a real time basis, an operation on the content of the data pushed on a dynamical data exchange channel. If the Windows function is used for creating or updating the link, there is no interrupt in the operation of the process and there is no easy solution for carrying out the operation. If a separate VSL is used, as suggested above, a computing process may be added in the dynamical data exchange VSL, and is executed at the time the channel is created or updated. This is possible simply by changing or amending the code for the VSL 32 or by invoking a computing function in this code.

The dynamical data exchange VSL 32 further allows a pre-processing of the vocable used for creating or updating a link. The vocable may thus be checked or changed according to the needs.

In the example of the Excel spreadsheet, when a cell is amended, the requested data update is sent to the server, indicating the nature of the data which will have to be refreshed and where it should be provided. Upon receiving this information, VSL 32 would create the appropriate dynamical data exchange channel, if it does not exist already. If the dynamical data exchange channel already exists, it may simply be amended. This could be the case, e.g. where there is a change in the format of the data to be refreshed. VSL 32 may also simply change the attributes of the dynamical data exchange channel, if an existing channel is able to provide the information required.

Similarly, in the example of an encapsulated Web application, VSL 32 would create or amend the dynamical data exchange channel necessary for providing the information.

The second process is an update process 34. The update process is embodied within the dynamical data exchange server; it pushes the fresh data from the dynamical data exchange server to the application, over the dynamical data exchange channel 14 created or updated by the DDE VSL 32. Thus, fresh data is not provided by the dynamical data exchange server 4 in response to a dynamical data exchange request from the application 2, but rather is "pushed" toward the application by the dynamical data exchange server 4 itself.

The update process 34 may be invoked according to various solutions. It may be invoked on a regular basis, possibly with a settable time period; this would allow automatic refresh of data, on a regular basis. It could be invoked, as discussed in reference to figure 3, whenever fresh or hot data as present; this solution avoids pushing toward the applications data already provided, while allowing each application to receive as soon as possible any new data. The update 34 could also be invoked by the application or by another DLL; this would notably allow the user of the application to request a refresh of all data. The update 34 could also be invoked for specific dynamical data exchange channels, e.g. in the example of an Excel worksheet, for updating a specific cell. These various solutions may be implemented according to the needs of the user or according to the applications. The solution used for invoking the update process 34 may vary according to the channels. A solution may be used for some channels - e.g. a massive update of all channels from time to time - while another solution is used for other channels.

The operation of the example of figure 1 is now briefly summarised. The information 28 regarding the data requested by application 2 is provided to dynamical data exchange server 4 thanks to the request DLL 26. Thus, the server 4 is kept aware of the type of information that needs to be pushed toward the application 2.

According to the information 28, the dynamical data exchange VSL 32 creates or maintains the dynamical data exchange channels 14 necessary for providing the requested information. These channels thus created or maintained are conventional channels, which may be created or modified with the usual tools or functions available in the server 4.

Last, the update process 34 pushes the data toward the application, over the dynamical data exchange channels maintained by VSL 32.

The application 2 is therefore provided with the requested data, but not in response to a dynamical data exchange request. Thus, the application 2 does not need to actively request the data, but simply keeps the server 4 informed of the nature of the requested data. Thus, contrary to the prior art solution, no answer is expected when the request DLL 26 is invoked. This means that the corresponding process will not remain active in the kernel, and will not compete with other processes.

On the other hand, the application 2 will still be provided with the refreshed information. Again, the information is pushed toward the application, but not in response to a standard dynamical data exchange request. Thus, none of the processes invoked for refreshing data expect a response and would remain active in the kernel pending this response.

The solution of figure 2 thus allows data to be refreshed, according to the needs, while avoiding the prior art problem of instability discussed in reference to figure 1. This solution also uses the dynamical data exchange mechanisms already provided in the operating system, for creating and maintaining the dynamical data exchange channels; thus, the solution takes advantage of the existing features of the operating system.

The operation of the input and output sections 20, 22 of the dynamical data exchange server is now discussed. The description given above makes it clear that the operation of the embodiment of figure 2 does not require the server to comprise such separate sections : the embodiment of figure 2 could also operate with a single table or section containing all data, wherein fresh data would simply replace older data. This would solve the prior art instability problem.

Separating the server as shown in figure 2 however makes it possible to better manage refreshment of data, as explained in reference to figure 3. This figure is a more detail schematic view of the dynamical data exchange server 4. It first shows the input section 20, which is embodied as a table having, for each entry, an identifier (marked ID in the figure) and a value. The identifier is a unique identifier of some piece of data; the corresponding value stores the latest received value received for this piece of data. In the example of a banking application under the Excel spreadsheet, the piece of data could be a given stock; the ID would be a unique identifier of this stock; the value would be the current estimate of the stock.

Figure 3 further shows, as figure 2, the flow of incoming fresh data 8. The values contained in this flow are copied into the relevant values within table 20. One may use for this purpose means known per se.

Figure 3 shows the output section 22 of the data server. This section is embodied as a table. For each entry in this table, there is provided an identifier or ID, a value, and also a channel reference. The ID and value are similar to those of the input section. The channel reference is representative of the dynamical data exchange channel over which the value should be pushed toward the application 2. This channel reference may be updated by the dynamical data exchange VSL 32, any time a dynamical data exchange channel is created or modified. Any entry of table 22 may be read by the update process 34 for pushing toward the application the corresponding value, over the corresponding channel.

Figure 3 further shows a status table 38. The status table is provided, for each entry, with an identifier or ID and with a status value, for the input and for the output. The ID is a unique identifier, as in the input and output tables. The status value, in the simplest embodiment, is a binary digit representative of the fact that the corresponding piece of data should or should not be updated. The status table may be accessed by the request DLL 26, for changing the status value of a given entry. Else, the status table may also be updated by the dynamical data exchange VSL 32, according to the requested data information 28.

Last, figure 3 shows the data manager 24. The data manager may access tables 20, 22 and 38. For a given ID, it may copy fresh values from table 20 into table 22, according to the status information provided for this ID in the status table 38.

The operation of the embodiment of figure 3 is the following. For a given ID that is for a given piece of information which may need to be refreshed - there are two possible statuses. The first status is a "play" status, in which the information is refreshed, according to the current rules. The second one is a "pause" status, in which is information is not refreshed. The status may be set by the request DLL, at the time it provides the requested data information; notably, this is made possible due to the fact that the status table is a separate table and may be accessed by the request DLL without hampering the operation of the data manager. Otherwise the status may be set by the dynamical data exchange VSL, according to the information received from the request DLL.

The operation of the data manager is the following. For any given ID, the data manager accesses the status table and reads the relevant status. If the status is "pause", the data manager does not amend the value in the output table, whatever the value in the input table. Else, if the status is "play", the data manager copies into the output table any value received in the input table. This ensures that the latest values received by the dynamical data exchange server 4 are pushed toward the application, for all IDs which have a "play" status.

In the operation exemplified in figure 3, two status values are proposed - play or pause. One may provide more than two possible values, so as to further elaborate the processing of data.

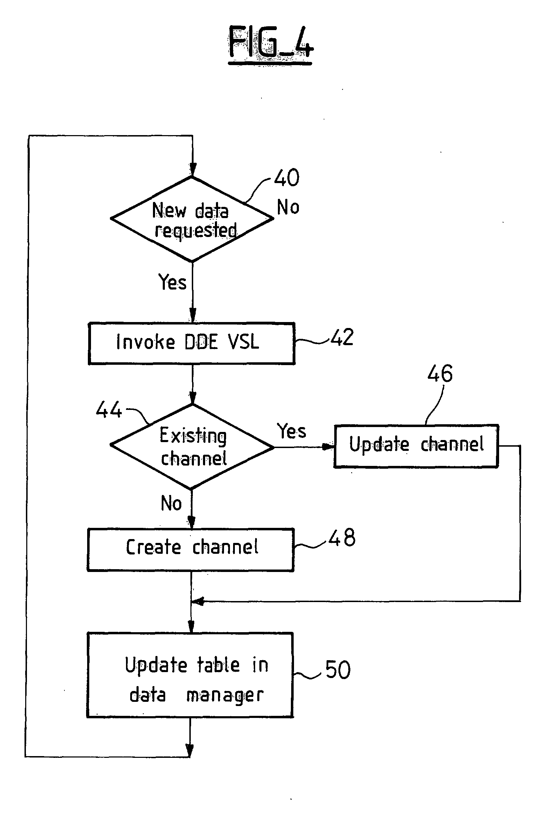

Figures 4-6 shows flowcharts of the processes used for carrying out the invention. The processes are executed simultaneously and in parallel for allowing real time processing of data. Figure 4 is a flowchart of a data request handing process. In step 40, it is determined whether new data is being requested by an application. This may be the case where the request DLL 26 has been invoked by an application. If new data is requested, the process goes to step 42; else it goes back to step 40 for awaiting a new data request.

At step 42, it is determined that new data is being requested. The dynamical data exchange VSL 32 is invoked.

At step 44, it is determined whether there already exists a dynamical data exchange channel for the requested data and the requesting application. If this is the case, the channel may be updated at step 46, else the channel is created at step 48.

After step 46 or 48, the process goes to step 50. The tables 20, 22 and 38 of the data server 4 are updated, if necessary. The process then goes back to step 40.

The process of figure 4 handles data requests originating from applications. It ensures that a relevant dynamical data exchange channel is always ready for pushing fresh data toward the application 2.

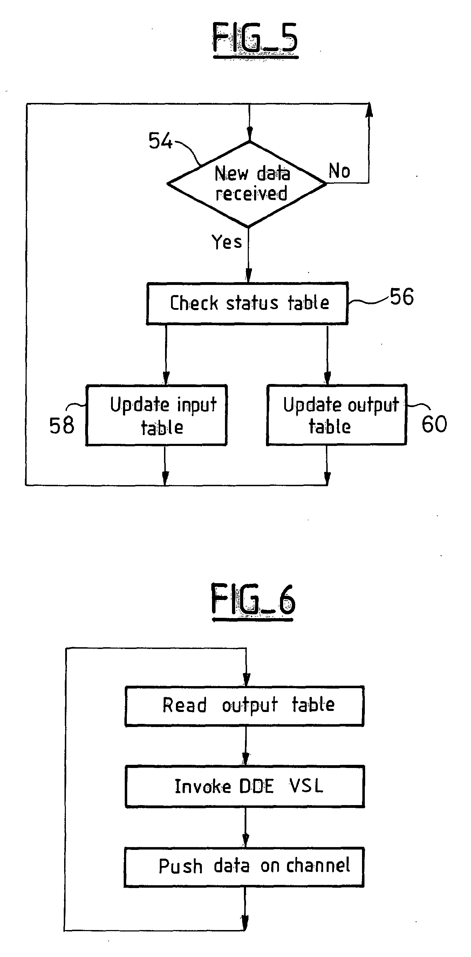

Figure 5 is a flowchart of a data receive process according to one embodiment of the invention; in step 54, it is checked whether new data is received in the dynamical data exchange server 4. If this is the case, the process goes to step 56, else it goes back to step 54, awaiting new data.

At step 56, new data has been received. The status table 38 is checked for determining which channel should be updated : this allows the process to check whether the freshly received data is requested or not by an application, and on which channels.

Steps 58 and 60 are then carried out in parallel. In step 58, the input table is updated for indicating that fresh data has arrived : the value for the data is updated. In step 60, the output table is updated, if necessary. For a freshly received data for which the status table indicates a "pause" on a relevant channel, the output table is not updated. For a freshly received data for which the status table indicates a "play" on a relevant channel, the output table is updated.

The process goes back to step 54.

The process of figure 5 makes it possible to provide fully updated tables to the data manager, according to the flow of input data.

Figure 6 is a flowchart of a data push process according to one embodiment of the invention. In step 64, the output table is read. For each entry into the table, the dynamical data exchange VSL 32 is invoked at step 66. The relevant channel is then updated, e.g. for pre-processing the vocable of the channel; at this table real-time processing of the data, e.g. for statistical purposes, may be carried out.

Then, at step 68, the data is pushed on the updated channel. The process goes to step 70, where it passes to the next entry of the table; it goes back to step 64.

The process of figure 6 pushes data toward the applications, on the relevant channels. Due to the process of figure 4, only requested data is being pushed. Due to the process of figure 5, only requested channels are updated.

The examples given above may be changed. Thus, figure 2 discloses the example of a DLL for indicating to the server nature of data requested by the application; one could use other solutions, such as a "send message" process. Similarly, in figure 2, dynamical data exchange VSL 32 is a process embodied in the dynamical data exchange server 4; it could be carried out as a process separate from the dynamical data exchange server. The same applies to the update process 34. These are implementation solutions understandable by the person skilled in the art of computers.

Figure 2 shows the example of an application running on the same computer as the dynamical data exchange server. The method also applies where the application and dynamical data exchange server run on separate machines - as this would be the case for an application encapsulated within a Web page and requesting refresh data from a Web server.

## Claims

1. A method for refreshing data in an application (2), comprising the steps of :

   - providing a dynamical data exchange server (4);
   - receiving fresh data in the server (4);
   - indicating to the server (4) the nature of data requested by the application (2);
   - creating or modifying at least a dynamical data exchange channel (14) between the server (4) and the application (2) according to the nature of data indicated;
   - pushing fresh data towards the application (2) on the dynamical data exchange channel (14).

2. The method of claim 1, wherein the step of indicating is carried out by a process (26) invoked by the application.

3. The method of claim 1 or 2, wherein the step of creating or modifying is carried out whenever nature of data is indicated to the server.

4. The method of claim 1, 2 or 3, further comprising the step of providing a second process (32), said second process being invoked for creating or modifying said at least one dynamical data exchange channel (14).

5. The method of claim 4, wherein the second process processes a vocable of the dynamical data exchange channel (14).

6. The method of one of claims 1 to 5, wherein the dynamical data exchange server (4) comprises an input section (20) for receiving fresh data, an output section (22) from which data is pushed toward the application, the method further comprising the step of copying data from the input section (20) to the output section (22).

7. The method of claim 6, wherein the step of indicating further comprises indicating a refresh status for the data requested by the application, and wherein the step of copying is carried out for the data requested by the application according to the refresh status.

## FIG_1

## FIG_2

# FIG_3

OUTPUT **22**

| CHANNEL | ID | VALUE |
|---------|-----|-------|
|         |     |       |

DATA MANAGER **24**

INPUT **20**

| ID | VALUE |
|----|-------|
|    |       |

STATUS **38**

| ID | STATUS (INPUT) | STATUS (OUTPUT) |
|----|----------------|-----------------|
|    |                |                 |

# FIG_4

New data requested — 40
No

Yes

Invoke DDE VSL — 42

Existing channel — 44
Yes → Update channel — 46

No

Create channel — 48

Update table in data manager — 50

## FIG_5

## FIG_6

**EP 1 398 717 A1**

<table>
<tr><td></td><td></td><td colspan="2">**EUROPEAN SEARCH REPORT**</td><td>Application Number</td></tr>
<tr><td></td><td>**European Patent Office**</td><td></td><td></td><td>EP 02 29 2221</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 926 822 A (GARMAN MARK B) 20 July 1999 (1999-07-20) * column 1, line 1 - column 6, line 17 * * column 15, line 29 - column 18, line 12 * --- | 1-7 | G06F17/60 G06F17/30 |
| A | SHAH K: "WINDOWS DDE FOR REAL-TIME APPLICATIONS DYNAMIC DATA EXCHANGE EXTENDS THE WINDOWS MESSAGE PROTOCOL" DR. DOBBS JOURNAL, REDWOOD CITY, CA, US, vol. 18, no. 1, 1993, pages 58,60-61,64,94, XP000579107 * the whole document * --- | 1-7 | |
| A | WO 99 40512 A (REUTERS LTD ;ASTIN TOM (US); KLIMCZAK JAREK (US); SEWARD DAN (US)) 12 August 1999 (1999-08-12) * the whole document * --- | 1-7 | |
| A | US 2002/036662 A1 (CHEN WENTAO ET AL) 28 March 2002 (2002-03-28) * the whole document * --- | 1-7 | |
| A | TOLSON B: "GRAFT WINDOWS PROGRAMS TO YOUR CUSTOM SOFTWARE AND REDUCE YOUR WORKLOAD" EDN ELECTRICAL DESIGN NEWS, CAHNERS PUBLISHING CO. NEWTON, MASSACHUSETTS, US, vol. 38, no. 8, 15 April 1993 (1993-04-15), pages 185-187, XP000383112 ISSN: 0012-7515 * the whole document * --- -/-- | 1 | |

**TECHNICAL FIELDS SEARCHED (Int.Cl.7)**

G06F

The present search report has been drawn up for all claims

| Place of search | Date of completion of the search | Examiner |
|---|---|---|
| MUNICH | 12 December 2002 | Bozas, I |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

**European Patent Office**

## EUROPEAN SEARCH REPORT

Application Number

EP 02 29 2221

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | STANISLOWSKI W: "Instrument control enhancements using Microsoft Windows 3.0" PROCEEDINGS OF THE INSTRUMENTATION AND MEASUREMENT TECHNOLOGY CONFERENCE. NEW YORK, MAY 12 - 14, 1992, NEW YORK, IEEE, US, 12 May 1992 (1992-05-12), pages 239-242, XP010063926 ISBN: 0-7803-0640-6 * the whole document * | 1 | |
| | ----- | | |
| | | | TECHNICAL FIELDS SEARCHED (Int.Cl.7) |

The present search report has been drawn up for all claims

| Place of search | Date of completion of the search | Examiner |
|---|---|---|
| MUNICH | 12 December 2002 | Bozas, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 29 2221

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2002

| Patent document cited in search report | | Publication date | Patent family member(s) | | Publication date |
|---|---|---|---|---|---|
| US 5926822 | A | 20-07-1999 | NONE | | |
| WO 9940512 | A | 12-08-1999 | AU | 2761999 A | 23-08-1999 |
| | | | WO | 9940512 A1 | 12-08-1999 |
| US 2002036662 | A1 | 28-03-2002 | DE | 10135445 A1 | 07-03-2002 |
| | | | GB | 2368941 A | 15-05-2002 |
| | | | JP | 2002189595 A | 05-07-2002 |

EPO FORM P0459

For more details about this annex : see Official Journal of the European Patent Office, No. 12/82